# EUROPEAN PATENT SPECIFICATION

(11) **EP 2 481 854 B1**
(45) Date of publication and mention of the grant of the patent: **22.07.2020**
(21) Application number: 12153421.8
(22) Date of filing: 01.02.2012
(51) Int. Cl.: E03B 1/04, E03B 3/03, E03D 5/00

(54) **Building having a central cistern**
Gebäude beinhaltend einen zentralen Wasserspeicher
Bâtiment comprenant un reservoir d'eau central

(30) Priority: 01.02.2011 NL 2006112
(43) Date of publication of application: 01.08.2012
(73) Proprietor: Easy Sanitary Solutions B.V., 7575 BK Oldenzaal (NL)
(72) Inventor: KEIZERS, Jurgen Hendrik Peter Joseph, 7582 GH Losser (NL)
(74) Representative: 't Jong, Bastiaan Jacob

(56) References cited:
- DE-A1- 19 816 734
- DE-U1- 29 606 087
- FR-A1- 2 911 617
- GB-A- 2 249 121

## Description

The invention relates to a building, such as a dwelling, according to the preamble of claim 1.

Such a building is known from FR 2911617. Further similar buildings according to the state of the art are also disclosed in De19816734A1, GB2249121A and DE29606087U1.

Such buildings having a central cistern as greywater collector are known. Rainwater and shower water are collected here in a tank. This greywater is then used to flush a toilet. For this purpose the cistern of the toilet is connected to the central cistern in which the greywater is stored. In some cases a pump may be further provided which supplies the water from the central cistern under pressure to the cistern of the toilet. In this latter case it is possible to arrange the central cistern under a toilet as seen in the direction of the force of gravity, for instance in the crawl space or cellar of a building.

In such a central cistern according to the prior art the toilets are still applied in a conventional manner. This means that each toilet has its own cistern. This cistern takes up space which is sometimes scarce in the room where the toilet is placed. The cistern of each toilet is moreover equipped with a float valve and flushing mechanism, which require periodic maintenance and increase the cost of a toilet.

An additional drawback of a separate cistern per toilet is that after flushing of the toilet it takes some time before the cistern of the toilet has been refilled. If the toilet is used frequently this can result in delay or poor flushing.

It is further known in the prior art to provide a toilet with pressure flushing. This is only possible when sufficient pressure is provided at the water main. This is not the case in all countries. In addition, the conduits and couplings of such a pressure flushing must meet high standards in order to prevent leakage. Furthermore, high-quality drinking water is used for flushing in the prior art, while this is not necessary.

It is now an object of the invention to provide a system wherein the above stated drawbacks are reduced or even obviated.

This object is achieved with a building according to claim 1.

Because a controllable valve is provided in each feed conduit from the central cistern to the water-using object, the water pressure of the central cistern can thus be used for the water-using object. A toilet for instance can thus be flushed by operating the valve. It is therefore not necessary to provide a secondary cistern which is first filled from the central cistern, after which the water-using object is provided with water from the secondary cistern.

By arranging a central cistern in a building the water-using objects, such as toilets in particular, can thus be simplified and less space is moreover necessary for these objects because the usual secondary cistern can be omitted.

In prior art toilets it is usual to make access to the secondary cistern possible via the operating member. The operating member hereby had a dimension which still enabled access to the cistern with a hand. Now that the secondary cistern is dispensed with in the invention, an access opening via the operating member is no longer necessary. The dimensions of the operating member can be considerably smaller in the invention.

In addition, considerably more water is present in the central cistern than is necessary for a single flushing of the toilet. A toilet can hereby be used again immediately following a flushing and it is not necessary, as with a prior art toilet, for the cistern to be first filled before a subsequent flushing can take place.

The advantage of the system according to the invention is that the conduits are exposed to a low pressure compared to the usual water conduit or pressure flushing. It is hereby not necessary to set high standards for the conduits, whereby the conduits can be of a lighter quality.

The lighter-quality conduits from the central cistern are hereby easier to place. Provisions for problems such as water shock and/or noise nuisance are no longer necessary.

In addition to the fact that the conduits can be of lighter quality, no high standards are set for the cistern itself. It is hereby possible to assemble the cistern from commercially available materials. A PVC tube of a suitable diameter and a closing cover can alone already form a central cistern. The usual saddles can then be arranged on the PVC tube for connection of connecting conduits running to the water users.

The water from the central cistern can also be used to water a garden or for a sprinkler installation arranged in the building.

According to the invention the water-using objects comprise at least one toilet bowl, and the respective conduit is connected to the flush pipe connection of the toilet bowl. The known cistern normally provided with a toilet bowl can hereby be omitted. The toilet bowl is provided with flushing water directly from the central cistern by operating the valve. Because the usual cistern for a toilet bowl can be dispensed with, more space remains available in the room in which the toilet is arranged.

The toilet bowl can moreover now also be arranged at more unconventional positions in a space. Because the usual secondary cistern arranged behind the toilet bowl can now be omitted, it is also possible to dispense with an upright wall behind the toilet bowl. In the invention the toilet bowl can thus also be arranged against a side of a bath or against a thin wall into which a cistern could not normally speaking be incorporated.

The respective conduit is arranged in the floor and enters the toilet bowl on the underside. This even makes it possible to arrange the toilet bowl wholly freestanding in a space.

Because the respective conduit is arranged in the floor, a foot-operated valve can also be easily arranged in the conduit.

Is also possible to integrate the outlet pipe and the inlet pipe, which in this embodiment are both connected to the underside of the toilet bowl. Only one conduit need hereby be arranged in the floor.

Because both the outlet pipe and the inlet pipe are arranged on the underside, it is easier to make the toilet height-adjustable. In addition to the fact that the toilet can be arranged at any desired position in a space and need not necessarily stand against a wall, a toilet more readily accessible to disabled persons can be obtained.

In another preferred embodiment of the building according to the invention the water-using objects comprise at least one toilet bowl, wherein the respective conduit is connected to the underside of the toilet bowl.

Because the central cistern is placed higher than the toilet bowl, there will always be sufficient pressure to flush the toilet. In addition, the capacity of the central cistern is considerably greater than a single flush.

In another embodiment of the building according to the invention the central cistern is provided with an overflow pipe which is connected to the sewer system of the building. This overflow pipe ensures that the quantity of water in the cistern is limited and that the system cannot come under pressure. A highly reliable embodiment is hereby provided.

In another preferred embodiment of the building according to the invention the building is provided with a rainwater discharge, which rainwater discharge debouches in the central cistern. Filling the central cistern with a rainwater provides for a very environmentally-friendly embodiment with which water-using objects can be provided with water.

Is also possible to fill the central cistern with waste water from a shower or bath. In addition, it is possible to guide the overflow water from special thermostat taps to the central cistern. Such a special mixer tap is for instance known from US 2002062867, which describes a tap with three positions. The water which is heated can hereby be diverted to a cistern, for instance for flushing water for a toilet.

The central cistern is arranged here above the water-using objects as seen in the direction of the force of gravity. The pressure resulting from the force of gravity can hereby be used to supply the water under pressure to the water-using objects.

In yet another embodiment of the building according to the invention the central cistern is integrated into a central discharge pipe arranged vertically in the building.

Buildings are normally provided nowadays with a central shaft in which is arranged, among other things, a central discharge pipe to which the outlets of different storeys are connected. The central cistern can be easily provided in this central shaft. By integrating the central cistern with the central discharge pipe, installation can take place easily during construction of the building. In addition, waste water running through the central discharge pipe can optionally be used to fill the cistern. In addition, the overflow of the central cistern can easily debouch into the central discharge pipe.

It is also possible to arrange the central cistern in a space in the building. Even more water-using objects can then be arranged thereon.

The cistern can optionally be provided whereby it can be immediately incorporated in a wall or tiled over with tiles.

In yet another embodiment of the building according to the invention a float valve is arranged in the central cistern, the float valve being connected to a water conduit. In this embodiment the central cistern can be filled in a more conventional manner from the water conduit.

In yet another embodiment of the building according to the invention the central cistern is provided with at least two compartments, wherein water-using objects on a first floor of the building are in liquid connection with a first compartment, and wherein water-using objects on a second floor are in liquid connection with a second compartment.

By providing a least two compartments in the central cistern the quantity of water supplied to the cistern can be separated. This achieves that when the central cistern is only half full the water-using objects on each floor can still be provided with water.

The central cistern preferably has a volume of at least 10 litres, more preferably more than 50 litres. What is important is that the central cistern has at least a volume suitable for multiple flushes of a toilet, and is thus larger than the usual conventional cisterns arranged adjacently of the conventional toilets.

These and other features of the invention are further elucidated with reference to the accompanying figures.
Figure 1 is a cross-sectional view of an embodiment of a building not according to the invention.
Figure 2 is a cross-sectional view of a toilet bowl connected to a central cistern.
Figure 3 is a cross-sectional view of an embodiment of a central cistern not according to the invention.
Figure 4 is a schematic view of a second embodiment of a building not according to the invention.
Figure 5 is a cross-sectional view of anembodiment of a part of a building according to the invention.

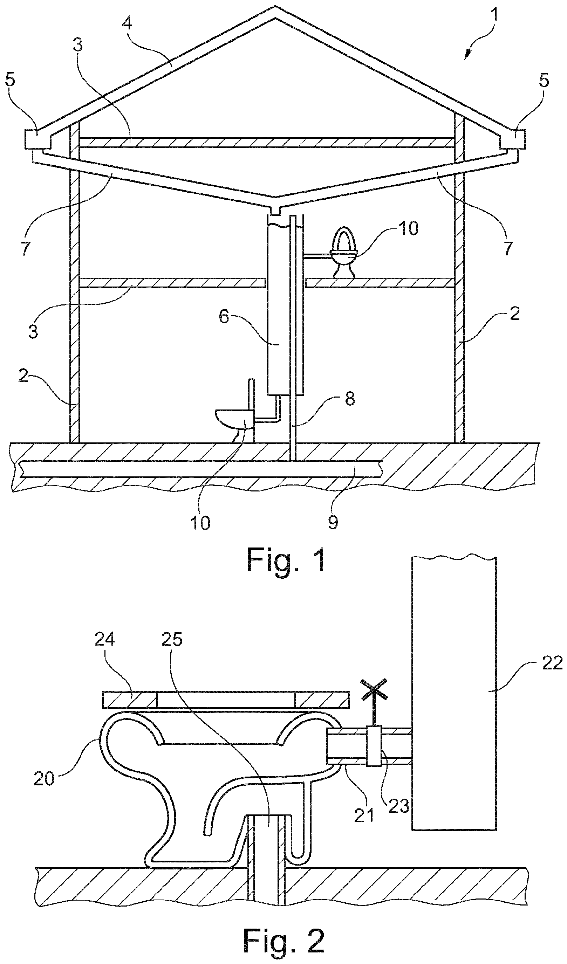

Figure 1 shows a dwelling 1 not according to the invention. This house 1 has walls 2, party floors 3 and a roof 4. Arranged along the edge of roof 4 are gutters 5 for collecting rainwater. Arranged in house 1 is a central cistern 6 which extends over two storeys through a party floor 3. Central cistern 6 is filled via pipes 7 with the water collected by gutters 5.

Provided in the central cistern 6 is an overflow pipe 8 which is connected to the sewer system 9 under house 1. This overflow pipe 8 prevents central cistern 6 overflowing.

On each floor a toilet 10 is connected to central cistern 6. Water from central cistern 6 can thus be used to flush the toilets 10.

Figure 2 shows a cross-sectional view of a toilet bowl 20. This toilet bowl 20 has on the rear side a flush pipe connection into which protrudes a connecting pipe 21. This connecting pipe 21 connects toilet bowl 20 to a central cistern 22.

Provided in connecting pipe 21 is a controllable valve 23 with which water from central cistern 22 can be admitted into toilet bowl 20 for flushing thereof.

A toilet seat 24 is further provided on toilet bowl 20 and an outlet opening 25 through which the flushing water can flow into the sewer system is arranged on the underside of toilet bowl 20.

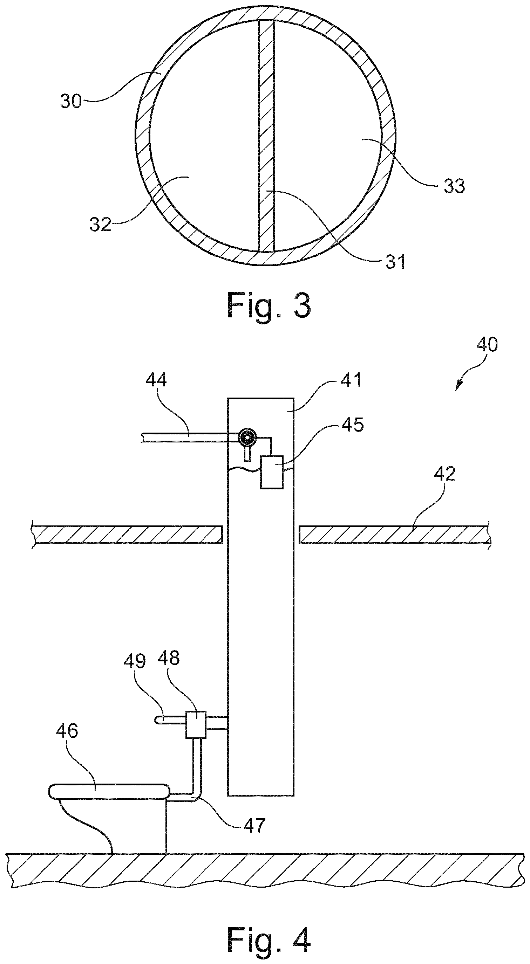

Figure 3 is a cross-sectional view of a central cistern 30. A separating wall 31 is provided in longitudinal direction in this central cistern 30. This creates a first channel 32 which can be used as cistern, while second channel 33 can serve as discharge pipe. Such a central discharge pipe is frequently applied in dwellings, and using this embodiment 30 the cistern 32 and the central discharge pipe 33 are integrated.

Figure 4 shows a second embodiment of a dwelling 40 not according to the invention. Provided in this dwelling 40 is a central cistern 41 which extends through the party floor 42 of dwelling 40.

Cistern 41 is filled via a water conduit 43 in which a tap 44 is provided which can be operated by a float valve 45.

Toilet bowl 46 is connected to central cistern 41. Connected to the usual flush pipe connection of toilet bowl 46 is a connecting pipe 47 in which a controllable valve 48 is arranged. This valve 48 can be operated via a handle 49 by the user of the toilet.

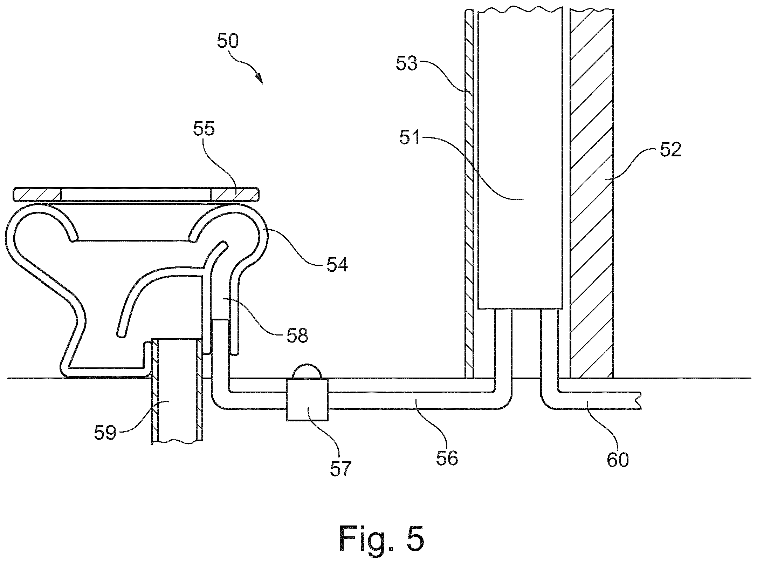

Figure 5 shows an embodiment of a building 50 according to the invention. In this embodiment 50 a central cistern 51 is arranged against an inner wall 52 of a space. A pre-wall 53 is arranged in front of cistern 51 in order to conceal cistern 51 from view.

A toilet bowl 54 is placed standing clear of walls 52 and 53 in the space. A toilet seat 55 is provided on toilet bowl 54.

Connected to the underside of cistern 51 is a conduit 56 which runs to a foot-operated valve 57 and is subsequently inserted into an inlet opening 58 on the underside of toilet bowl 54. An outlet pipe 59 is likewise provided on the underside of toilet bowl 54 directly adjacently of inlet pipe 56.

Further conduits 60 and water-using objects (not shown) can be connected to central cistern 51 by operating the valve.

## Claims

1. Building (50), such as a dwelling, comprising a central cistern (51) arranged in the building (50) and a number of water-using objects, such as a toilet (54) in particular, arranged in the building (50), which water-using objects (54) are connected via respective conduits (56) to the central cistern (51), wherein for each water-using object (54) a controllable valve (57) is arranged in the respective conduit (56) in order to enable water to be supplied from the central cistern (51) to the water-using object (54) by operating the valve (57) and wherein the central cistern (51) is arranged above the water-using objects (54) as seen in the direction of the force of gravity, wherein the water-using objects (54) comprise at least one toilet bowl, wherein the respective conduit (56) is connected to the flush pipe connection (58) of the toilet bowl (54), **characterized in that**
the respective conduit (56) is arranged in the floor on which the toilet bowl (54) is arranged, wherein the respective conduit (56) enters the toilet bowl on the underside thereof.

2. Building (50) as claimed in claim 1, wherein the water-using objects (54) comprise at least one toilet bowl (54), and wherein the respective conduit (56) is connected to the underside of the toilet bowl (54).

3. Building (50) as claimed in any of the foregoing claims, wherein the central cistern (51) is provided with an overflow pipe which is connected to the sewer system of the building.

4. Building (50) as claimed in any of the foregoing claims, wherein the building (50) is provided with a rainwater discharge, which rainwater discharge debouches in the central cistern (51).

5. Building (50) as claimed in any of the foregoing claims, wherein the central cistern (51) is integrated into a central discharge pipe arranged vertically in the building (50) .

6. Building (50) as claimed in any of the foregoing claims, wherein a float valve is arranged in the central cistern (51), the float valve being connected to a water conduit.

7. Building (50) as claimed in any of the foregoing claims, wherein the central cistern (51) is provided with at least two compartments, wherein water-using objects on a first floor of the building (50) are in liquid connection with a first compartment, and wherein water-using objects on a second floor are in liquid connection with a second compartment.

8. Building (50) as claimed in any of the foregoing claims, wherein the central cistern (51) has a volume of at least 10 litres, more preferably more than 50 litres.

## Patentansprüche

1. Gebäude (50), wie beispielsweise ein Wohnhaus, das einen zentralen Wasserspeicher (51) umfasst, der in dem Gebäude (50) angeordnet ist, und eine Reihe von Wasser verwendenden Objekten, wie beispielsweise insbesondere eine Toilette (54), die in dem Gebäude (50) angeordnet sind, wobei die Wasser verwendenden Objekte (54) über jeweilige Leitungen (56) mit dem zentralen Wasserspeicher (51) verbunden sind, wobei für jedes Wasser verwendende Objekt (54) ein steuerbares Ventil (57) in der jeweiligen Leitung (56) angeordnet ist, um es zu ermöglichen, dass durch Betätigen des Ventils (57) Wasser von dem zentralen Wasserspeicher (51) an das Wasser verwendende Objekt (54) geliefert wird, und wobei der zentrale Wasserspeicher (51) in Richtung der Schwerkraft betrachtet über den Wasser verwendenden Objekten (54) angeordnet ist, wobei die Wasser verwendenden Objekte (54) mindestens ein Toilettenbecken umfassen, wobei die jeweilige Leitung (56) verbunden ist, um die Rohrverbindung (58) des Toilettenbeckens (54) zu spülen, **dadurch gekennzeichnet, dass**
die jeweilige Leitung (56) in dem Boden angeordnet ist, auf dem das Toilettenbecken (54) angeordnet ist, wobei die jeweilige Leitung (56) an dessen Unterseite in das Toilettenbecken eintritt.

2. Gebäude (50) nach Anspruch 1, wobei die Wasser verwendenden Objekte (54) mindestens ein Toilettenbecken (54) umfassen, und wobei die jeweilige Leitung (56) mit der Unterseite des Toilettenbeckens (54) verbunden ist.

3. Gebäude (50) nach einem der vorstehenden Ansprüche, wobei der zentrale Wasserspeicher (51) mit einem Überlaufrohr bereitgestellt ist, das mit der Abwasserkanalisation des Gebäudes verbunden ist.

4. Gebäude (50) nach einem der vorstehenden Ansprüche, wobei das Gebäude (50) mit einem Regenwasserabfluss bereitgestellt ist, wobei der Regenwasserabfluss in den zentralen Wasserspeicher (51) mündet.

5. Gebäude (50) nach einem der vorstehenden Ansprüche, wobei der zentrale Wasserspeicher (51) in eine zentrale Abflussleitung integriert ist, die im Gebäude (50) vertikal angeordnet ist.

6. Gebäude (50) nach einem der vorstehenden Ansprüche, wobei in dem zentralen Wasserspeicher (51) ein Schwimmerventil angeordnet ist, wobei das Schwimmerventil mit einer Wasserleitung verbunden ist.

7. Gebäude (50) nach einem der vorstehenden Ansprüche, wobei der zentrale Wasserspeicher (51) mit mindestens zwei Abteilungen bereitgestellt ist, wobei Wasser verwendende Objekte auf einem ersten Stockwerk des Gebäudes (50) in Flüssigkeitsverbindung mit einem ersten Abteil stehen, und wobei Wasser verwendende Objekte auf einem zweiten Stockwerk in Flüssigkeitsverbindung mit einem zweiten Abteil stehen.

8. Gebäude (50) nach einem der vorstehenden Ansprüche, wobei der zentrale Wasserspeicher (51) ein Volumen von mindestens 10 Litern, bevorzugterweise von mehr als 50 Litern aufweist.

## Revendications

1. Bâtiment (50), tel qu'un logement, comprenant une citerne centrale (51) agencée dans le bâtiment (50) et un certain nombre d'objets consommant de l'eau, tels que des toilettes (54) en particulier, agencés dans le bâtiment (50), lesquels objets consommant de l'eau (54) sont reliés, par le biais de conduites respectives (56), à la citerne centrale (51), dans lequel, pour chaque objet consommant de l'eau (54), une vanne réglable (57) est agencée dans la conduite respective (56) afin de permettre à de l'eau d'être fournie depuis la citerne centrale (51) à l'objet consommant de l'eau (54) en faisant fonctionner la vanne (57) et dans lequel la citerne centrale (51) est agencée au-dessus des objets consommant de l'eau (54) comme vu dans la direction de la force de gravité, dans lequel les objets consommant de l'eau (54) comprennent au moins une cuvette de toilette, dans lequel la conduite respective (56) est reliée au raccord de tuyau de chasse (58) de la cuvette de toilette (54), **caractérisé en ce que**
la conduite respective (56) est agencée dans le sol sur lequel la cuvette de toilette (54) est agencée, dans lequel la conduite respective (56) entre dans la cuvette de toilette sur la face inférieure de celle-ci.

2. Bâtiment (50) tel que revendiqué dans la revendication 1, dans lequel les objets consommant de l'eau (54) comprennent au moins une cuvette de toilette (54) et dans lequel la conduite respective (56) est reliée à la face inférieure de la cuvette de toilette (54).

3. Bâtiment (50) tel que revendiqué dans l'une quelconque des revendications précédentes, dans lequel la citerne centrale (51) est pourvue d'un tuyau de trop plein qui est relié au système d'égout du bâtiment.

4. Bâtiment (50) tel que revendiqué dans l'une quelconque des revendications précédentes, dans lequel le bâtiment est pourvu d'une évacuation d'eau de pluie, laquelle évacuation d'eau de pluie débouche dans la citerne centrale (51).

5. Bâtiment (50) tel que revendiqué dans l'une quelconque des revendications précédentes, dans lequel la citerne centrale (51) est intégrée dans un tuyau d'évacuation central agencé verticalement dans le bâtiment (50).

6. Bâtiment (50) tel que revendiqué dans l'une quelconque des revendications précédentes, dans lequel un robinet à flotteur est agencé dans la citerne centrale (51), le robinet à flotteur étant relié à une conduite d'eau.

7. Bâtiment (50) tel que revendiqué dans l'une quelconque des revendications précédentes, dans lequel la citerne centrale (51) est pourvue d'au moins deux compartiments, dans lequel des objets consommant de l'eau sur un premier étage du bâtiment (50) sont en connexion liquide avec un premier compartiment et dans lequel des objets consommant de l'eau sur un second étage sont en connexion liquide avec un second compartiment.

8. Bâtiment (50) tel que revendiqué dans l'une quelconque des revendications précédentes, dans lequel la citerne centrale (51) présente un volume d'au moins 10 litres, plus préférablement supérieur à 50 litres.
